# EUROPÄISCHE PATENTSCHRIFT

(11) **EP 2 420 474 B1**
(45) Veröffentlichungstag und Bekanntmachung des Hinweises auf die Patenterteilung: **22.03.2017**
(21) Anmeldenummer: 10173296.4
(22) Anmeldetag: 18.08.2010
(51) Int. Cl.: C09K 21/02, C08K 7/00, C01F 7/02, C09C 1/40

(54) **Verfahren zur Mahltrocknung von Aluminiumtrihydroxid**
Method for mill-drying aluminium trihydroxide
Procédé de broyage-séchage de tri-hydroxyde d'aluminium

(43) Veröffentlichungstag der Anmeldung: 22.02.2012
(73) Patentinhaber: Nabaltec AG, 92421 Schwandorf (DE)
(72) Erfinder: Reimer, Dr. Alfred, 93437 Furth im Wald (DE); Ihmels, Dr. Carsten, 92421 Schwandorf (DE); Beer, Christian, 93176 Beratzhausen (DE)
(74) Vertreter: Büchel, Edwin

(56) Entgegenhaltungen:
- EP-A2- 1 555 286
- EP-A2- 1 840 085
- DE-C1- 10 248 174
- US-A1- 2003 207 980
- US-A1- 2006 084 744
- US-A1- 2006 140 851
- US-A1- 2009 176 921

## Beschreibung

Die Erfindung betrifft ein Verfahren zur Mahltrocknung eines Rohgemisches enthaltend Aluminiumtrihydroxid.

In der Bau-, Möbel-, Transport-, Elektro- und Elektronikindustrie werden Polymere als Werkstoffe eingesetzt. Für viele Anwendungen müssen die Polymere nationale und internationale Flammschutznormen erfüllen. Da die meisten Polymere, insbesondere solche, die aus Monomeren auf Kohlenwasserstoffbasis erhältlich sind, brennbar sind, ist es notwendig, die Polymere mit Flammschutzmitteln auszustatten, um eine Einstufung des Polymers als flammgeschützt erreichen zu können. Im Allgemeinen wird dies durch den Zusatz organischer oder anorganischer Flammschutzmittel erreicht. Als Flammschutzmittel werden beispielsweise Metallhydrate eingesetzt, wobei die Metallhydrate des Aluminiums eine wichtige Bedeutung erlangt haben (G. Kirschbaum, Kunststoffe; 79, 1999, 1205 - 1208 und R. Schmidt, Kunststoffe, 88, 1998, 2058 - 2061).

Die flammschützende Wirkung des Aluminiumtrihydroxids beruht auf der thermischen Abspaltung des chemisch gebundenen Wassers im Brandfall bei Temperaturen im Bereich von 200 bis 400 °C. Während dieser endothermen Zersetzung des Aluminiumtrihydroxids wird Energie verbraucht, wodurch die Oberfläche des Kunststoffs gekühlt wird. Zusätzlich verdünnt der freigesetzte Wasserdampf die brennbaren organischen Abbauprodukte der Polymere. Das als Rückstand verbleibende Aluminiumoxid weist dabei eine hohe spezifische Oberfläche auf und absorbiert polycyclische und aromatische Kohlenwasserstoffverbindungen, die bei der Verbrennung des Polymers entstehen. Hierdurch werden diese Verbindungen dem Verbrennungsprozess entzogen. Da polycyclische und aromatische Kohlenwasserstoffverbindungen Bestandteile des schwarzen Brandrauchs sind, trägt Aluminiumtrihydroxid auch zu einer Reduktion der Rauchgasdichte im Brandfall bei. Durch den Einsatz von Aluminiumtrihydroxid lassen sich somit halogenfreie flammgeschützte Kunststoffe herstellen, wobei auf den Einsatz halogenhaltiger Flammschutzmittel verzichtet werden kann.

Um einen ausreichenden Flammschutz zu gewährleisten und die Flammschutznormen zu erfüllen, sind jedoch hohe Einsatzmengen an Aluminiumtrihydroxiden in Kunststoffen notwendig. Aufgrund des hohen Füllgrades gestaltet sich der Verarbeitungsprozess solcher flammgeschützter Polymermischungen, insbesondere beim Einsatz in Flüssigharzen oftmals schwierig und die mechanischen Eigenschaften der daraus erhältlichen Kunststoffe sind oft ungenügend.

Prinzipiell sind aus Gründen der Flammschutzeffektivität zwar hohe Oberflächen gewünscht, diese machen aber aufgrund eines stärkeren Viskositätsanstiegs die Einarbeitung ins Polymer unddessen anschließende Weiterverarbeitung deutlich schwerer. Niedrige BET-Oberflächen sind wegen der leichteren Einarbeitung in Polymere zwar von Vorteil, gleichzeitig jedoch nachteilig, da Aluminiumtrihydroxid mit einer niedrigen BET-Oberfläche nur eine unbefriedigende Flammschutzwirkung aufweist. Daher wird je nach Einsatzzweck und Einarbeitungstechnologie in der Regel zwischen relativ groben, gemahlenen Qualitäten und sogenannten feinstgefälltem Aluminiumtrihydroxid-Qualitäten unterschieden.

Beim Einsatz von Aluminiumtrihydroxid in Flüssigharzen wird üblicherweise recht grobes Aluminiumtrihydroxid eingesetzt, das durch Mahlung aus Rohaluminiumhydroxid erhalten wird.

Hierdurch wird neben einer Verringerung der mittleren Teilchengröße D₅₀ ein deutlicher Anstieg der spezifischen Oberfläche nach BET erreicht. Die durch Mahlverfahren nach dem Stand der Technik erhaltenen Aluminiumtrihydroxide weisen daher eine verbesserte flammschützende Wirkung auf. Allerdings sind solche Aluminiumtrihydroxide als Flammschutzmittel nur bedingt einsetzbar, da sie bei der Einarbeitung in Flüssigharze zu einem drastischen Viskositätsanstieg der Flüssigharzmischung führen, der die Verarbeitbarkeit solcher Flüssigharzmischungen erschwert oder unmöglich macht. Daher wird der Mahlvorgang üblicherweise bei mittleren Korngrößen oberhalb der 5 µm gestoppt, weil hier noch akzeptable Oberflächen im Bereich ≤ 3 m²/g erreicht werden. Eine stärkere Vermahlung erzeugt einen deutlichen Anstieg der Oberfläche und erschwert die Prozessierbarkeit des erhaltenen Aluminiumtrihydroxids und des daraus erzeugten Compounds zu sehr. Daher wird zur Herstellung feinteiligen Aluminiumtrihydroxids der Weg über Fällungsmethoden gewählt, bei dem prinzipiell niedrigere Oberflächen realisiert werden können.

Im Falle von thermoplastischen und Gummi-Anwendungen kommen in der Regel feinstgefällte Aluminiumtrihydroxid-Qualitäten zum Einsatz.

Hierzu wird grobes Roh-Aluminiumtrihydroxid in Natronlauge gelöst und anschließend kontrolliert gefällt. Bei diesem Prozess wird Aluminiumtrihydroxid erhalten, das in der Regel eine mittlere Teilchengröße D₅₀ deutlich unterhalb von 3 µm aufweist. Die so erhaltenen Aluminiumtrihydroxide weisen eine relativ niedrige spezifische Oberfläche nach BET, üblicherweise im Bereich von 2 bis 12 m²/g, selten höher auf. Für den Fall, dass Aluminiumtrihydroxide solcher Korngrößen durch aufwendige Mahlvorgänge hergestellt werden, führt dies zu Aluminiumtrihydroxiden mit deutlich höheren BET-Oberflächen.

Aluminiumtrihydroxid mit einer hohen spezifischen Oberfläche nach BET ist somit einerseits von Vorteil, da die Flammschutzwirkung mit steigender spezifischer Oberfläche nach BET zunimmt, andererseits führen solche Aluminiumtrihydroxide bei der Einarbeitung in Flüssigharze zu einem drastischen Viskositätsanstieg, der die Verarbeitbarkeit der Harze erschwert oder sogar unmöglich macht. In der EP 1 555 286 wird ein Verfahren beschrieben, bei dem durch Fällung und Filtration gewonnenes Aluminiumtrihydroxid mit einer mittleren Teilchengröße D₅₀ im Bereich von 0,8 bis 1,5 µm und einem hohen Wassergehalt im Bereich von 50 Gew.-%, bezogen auf Aluminiumtrihydroxid, einem Mahltrocknungsprozess bei Temperaturen im Bereich von 150 bis 450 °C unterzogen wird. Das nach diesem Verfahren erhältliche Aluminiumtrihydroxid weist gute Viskositätseigenschaften in Flüssigharzen auf, wobei jedoch noch Raum für Verbesserungen besteht. Nachteilig bei dem in EP 155 286 beschriebenen Verfahren ist insbesondere, dass ein durch Fällung erhältliches Aluminiumtrihydroxid mit einer mittleren Teilchengröße D₅₀ im Bereich von 0,8 bis 1,5 µm eingesetzt werden muss.

Eine weitere im Stand der Technik beschriebene Möglichkeit zur Vermeidung der nachteiligen Viskositätseigenschaften von Aluminiumtrihydroxid in Flüssigharzsystemen ist die Beschichtung von Aluminiumtrihydroxidpartikeln mit organischen Additiven wie zum Beispiel Silanen, Fettsäuren und/oder Titanaten.

Aufgabe der vorliegenden Erfindung ist daher die Bereitstellung eines Verfahrens zur Herstellung von Aluminiumtrihydroxid, das eine hohe spezifische Oberfläche nach BET aufweist und gut in Flüssigharze einarbeitbar ist und insbesondere nicht zu den vorstehend beschriebenen drastischen Viskositätsanstiegen führt. Das Verfahren soll kostengünstiger als die im Stand der Technik beschriebenen Verfahren sein, insbesondere sollen kostenintensive Beschichtungsverfahren vermieden werden, und als Ausgangsprodukte sollen auch Aluminiumtrihydroxide mit deutlichen höheren mittleren Teilchengrößen D₅₀ einsetzbar sein.

Die Aufgabe wird gelöst durch ein Verfahren, bei dem ein Rohgemisch enthaltend Aluminiumtrihydroxid mit einer mittleren Teilchengröße im Bereich von 50 bis 130 µm einem Mahltrocknungsverfahren unterzogen wird. Gegenstand der Erfindung ist daher ein Verfahren zur Mahltrocknung eines Rohgemisches enthaltend Aluminiumtrihydroxid mit einer mittleren Teilchengröße D₅₀ im Bereich von 50 bis 130 µm und einer spezifischen Oberfläche nach BET im Bereich von 0,01 bis 0,5 m²/g und 0,1 bis 20 Gew.-% Wasser bezogen auf das Rohgemisch, enthaltend die Schritte
i) Zuführen des Rohgemisches in ein Mahltrocknungsaggregat,
ii) Zuführen eines Heißluftstroms mit einer Temperatur im Bereich von 20 bis 150 °C in das Mahltrocknungsaggregat der das Mahltrocknungsaggregat durchströmt, und
iii) Zerkleinern des im Rohgemisch enthaltenen Aluminiumtrihydroxid im Mahltrocknungsaggregat.

Das erfindungsgemäße Verfahren ist gegenüber den im Stand der Technik bekannten Verfahren kostengünstiger. In das erfindungsgemäße Verfahren können Aluminiumtrihydroxide mit einer mittleren Teilchengröße D₅₀ im Bereich von 50 bis 130 µm eingesetzt werden. Zudem kann das erfindungsgemäße Verfahren - im Vergleich zum Verfahren nach dem Stand der Technik (EP 155 286; 150 bis 450 °C) bei deutlich niedrigeren Temperaturen durchgeführt werden, was zu einer Energieersparnis führt und zudem eine Dehydratisierung von Aluminiumtrihydroxid zu Aluminiumoxid ausschließt.

Das nach dem erfindungsgemäßen Verfahren erhältliche Aluminiumtrihydroxid weist eine hohe spezifische Oberfläche nach BET und damit eine exzellente Flammschutzwirkung auf. Das nach dem erfindungsgemäßen Verfahren erhältliche Aluminiumtrihydroxid ist dabei gut in Flüssigharze einarbeitbar und führt insbesondere nicht zu einem drastischen Viskositätsanstieg des erhaltenen Flüssigharzgemisches, wie er bei Aluminiumtrihydroxiden aus dem Stand der Technik beobachtet wird.

Das in das erfindungsgemäße Verfahren eingesetzte Rohgemisch enthält 50 bis 99,9 Gew.-%, vorzugsweise 80 bis 99,85 Gew.-% Aluminiumtrihydroxid, 0,1 bis 20 Gew.-% Wasser und gegebenenfalls 0 bis 30 Gew.-% weitere Substanzen wie beispielsweise Böhmit, Magnesiumhydroxid, Stannate, Silane, mehrfach kondensierte Silane, Siloxane, Borate, Fettsäuren, Fettsäureester, Salze der Fettsäuren, Polymeremulsionen, Polymerlösungen und/oder Titanate.

Das Rohgemisch enthält Aluminiumtrihydroxid mit einer mittleren Teilchengröße D₅₀ im Bereich von 50 bis 130 µm, vorzugsweise im Bereich von 80 bis 120 µm, mehr bevorzugt im Bereich von 90 bis 110 µm und insbesondere bevorzugt im Bereich von 95 bis 105 µm Die in der vorliegenden Erfindung angegebenen mittleren Teilchengrößen D₅₀ sind mittels Lasergranulometrie bestimmt worden (Lasergranulometer Cilas 1064, Auswertung nach Fraunhofer).

Das im Rohgemisch enthaltene Aluminiumtrihydroxid weist eine spezifische Oberfläche nach BET im Bereich von 0,01 bis 0,5 m²/g, vorzugsweise 0,05 bis 0,4 m²/g, mehr bevorzugt 0,06 bis 0,35 m²/g und insbesondere bevorzugt 0,07 bis 0,25 m²/g auf. Die in der vorliegenden Erfindung angegebenen spezifischen Oberflächen nach BET sind nach der Brunauer-Emmet-Teller-Methode nach ISO 9277 bestimmt worden.

Das Rohgemisch enthält im Allgemeinen 0,1 bis 20 Gew.-% Wasser bezogen auf das Rohgemisch. Bevorzugt sind im Rohgemisch 3 bis 15 Gew.-%, mehr bevorzugt 4 bis 12 Gew.-% und insbesondere bevorzugt 6 bis 10 Gew.-% Wasser, bezogen auf das Rohgemisch, enthalten.

In einer bevorzugten Ausführungsform enthält das Rohgemisch ein Aluminiumtrihydroxid, das herstellungsbedingt 1 bis 20 Gew.-%, bevorzugt 3 bis 15 Gew.-%, mehr bevorzugt 4 bis 12 Gew.-% und insbesondere 6 bis 10 Gew.-% Wasser bezogen auf Aluminiumtrihydroxid enthält. In diesem Fall entstammt das im Rohgemisch enthaltene Wasser allein dem im Rohgemisch enthaltenden Aluminiumtrihydroxid. Es ist auch möglich, Aluminiumtrihydroxide mit einem niedrigeren Wassergehalt einzusetzen und dem Rohgemisch Wasser zuzusetzen. Dies ist jedoch nicht bevorzugt.

Das Rohgemisch kann neben Aluminiumtrihydroxid weitere Substanzen wie beispielsweise Böhmit, Magnesiumhydroxid, Stannate, Silane, mehrfach kondensierte Silane, Siloxane, Borate, Fettsäuren, Fettsäureester, Salze der Fettsäuren, Polymeremulsionen, Polymerlösungen und/oder Titanate enthalten. Bevorzugt sind diese Substanzen herstellungsbedingt in dem im Rohgemisch enthaltenen Aluminiumtrihydroxid enthalten. Es ist auch möglich, dem Rohgemisch weitere Substanzen zuzusetzen.

In einer Ausführungsform wird ein Rohgemisch bestehend aus Aluminiumtrihydroxid enthaltend 0,1 bis 20 Gew.% Wasser, bevorzugt 3 bis 15 Gew.-% Wasser, mehr bevorzugt 4 bis 12 Gew.-% und insbesondere bevorzugt 6 bis 10 Gew.-% Wasser bezogen auf das Aluminiumtrihydroxid mit einer mittleren Teilchengröße D₅₀ im Bereich von 50 bis 130 µm, bevorzugt 80 bis 120 µm, mehr bevorzugt 90 bis 110 µm und insbesondere bevorzugt 95 bis 105 µm und einer spezifischen Oberfläche nach BET im Bereich von 0,01 bis 0,5 m²/g, bevorzugt 0,05 bis 0,4 m²/g, mehr bevorzugt 0,06 bis 0,35 m²/g und insbesondere bevorzugt 0,07 bis 0,25 m²/g eingesetzt.

In einer bevorzugten Ausführungsform wird ein Rohgemisch bestehend aus Aluminiumtrihydroxid enthaltend 6 bis 10 Gew.-% Wasser bezogen auf Aluminiumtrihydroxid mit einer mittleren Teilchengröße D₅₀ im Bereich von 90 bis 110 µm und einer spezifischen Oberfläche nach BET im Bereich von 0,07 bis 0,25 m²/g eingesetzt.

Nach dem erfindungsgemäßen Verfahren wird das Rohgemisch in Schritt i) einem Mahltrocknungsaggregat zugeführt. Geeignete Mahltrocknungsaggregate sind an sich bekannt und beispielsweise in Lueger, Lexikon der Technik, Band 48, Seite 394 beschrieben.

In einer besonderen Ausführungsform enthält das Mahltrocknungsaggregat einen fest auf eine massive Welle montierten Rotor, der sich mit einer Umfangsgeschwindigkeit im Bereich von 20 bis 200 m/s, bevorzugt 30 bis 180 m/s, mehr bevorzugt 90 bis 120 m/s und insbesondere bevorzugt 60 bis 70 m/s dreht.

Gegenstand der Erfindung ist daher auch ein Verfahren, bei dem das Mahltrocknungsaggregat ein Rotor-Stator-System enthält und der Rotor eine Umfangsgeschwindigkeit im Bereich von 20 bis 200 m/s aufweist.

Die Zuführung des Rohgemisches zum Mahltrocknungsaggregat (Schritt i)) kann durch an sich bekannte Methoden wie beispielsweise Förderbänder, Förderschnecken, Exzenterschneckenpumpen und Spiralförderer erfolgen. In einer bevorzugten Ausführungsform wird das Rohgemisch dem Mahltrocknungsaggregat mittels einer Förderschnecke zugeführt.

Dem Mahltrocknungsaggregat wird in Schritt ii) ein Heißluftstrom mit einer Temperatur im Bereich von 20 bis 150 °C, bevorzugt 20 bis 120 °C, mehr bevorzugt 20 bis 100 °C und insbesondere bevorzugt 20 bis 80 °C zugeführt. Der Heißluftstrom tritt in einer bevorzugten Ausführungsform am unteren Ende des Mahltrocknungsaggregates durch eine Einlassöffnung in das Mahltrocknungsaggregat ein und durchströmt dieses von unten nach oben, wobei der Heißluftstrom in Verbindung mit der Drehbewegung des Rotors des Mahltrocknungsaggregates eine turbulente Strömung ausbildet und tritt am oberen Ende des Mahltrocknungsaggregates durch eine Austrittsöffnung aus dem Mahltrocknungsaggregat aus. In einer bevorzugten Ausführungsform weist der Heißluftstrom im Mahltrocknungsaggregat eine Reynoldszahl > 3000 auf. Der Heißluftstrom durchströmt das Mahltrocknungsaggregat im Allgemeinen mit einem Luftdurchsatz im Bereich von 3000 bis 7000 Bm³/h.

Im Mahltrocknungsaggregat wird das im Rohgemisch enthaltene Aluminiumtrihydroxid durch den Heißluftstrom in Verbindung mit der Drehbewegung des Rotors beschleunigt. Hierdurch kommt es zu einer Zerkleinerung des im Rohgemisch enthaltenen Aluminiumtrihydroxids durch Stöße der Aluminiumtrihydroxidpartikel untereinander und/oder durch Stöße der Aluminiumtrihydroxidpartikel mit dem Rotor-Stator-System des Mahltrocknungsaggregates (Schritt iii)). Gleichzeitig wird dem Rohgemisch durch die frei werdende Mahlenergie Wasser entzogen. Das im Rohgemisch enthaltene Aluminiumtrihydroxid wird anschließend aus dem Mahltrocknungsaggregat ausgetragen. Der Austrag erfolgt in einer bevorzugten Ausführungsform durch die Austrittsöffnung, durch die der dem Mahltrocknungsaggregat zugeführte Heißluftstrom austritt. Das aus dem Reaktor austretende Gemisch, enthaltend Aluminiumtrihydroxid, Heißluftstrom und das dem Aluminiumtrihydroxid des Rohgemisches entzogene Wasser, wird gegebenenfalls weiteren Aufarbeitungsschritten unterzogen. Diese sind beispielsweise Abtrennen der zerkleinerten Aluminiumtrihydroxidpartikel von dem Heißluftstrom und dem dem Rohgemisch in Schritt iii) entzogenen Wasser.

Die Schritte i), ii) und iii) können nacheinander oder gleichzeitig durchgeführt werden. In einer bevorzugten Ausführungsform werden die Schritte i), ii) und iii) gleichzeitig und das Mahltrocknungsverfahren kontinuierlich durchgeführt. In dieser Ausführungsform wird dem Mahltrocknungsaggregat gleichzeitig das Rohgemisch und der Heißluftstrom zugeführt.

Die Verweilzeit des Rohgemisches im Mahltrocknungsaggregat beträgt im Allgemeinen 0,01 bis 1 Sekunden, bevorzugt 0,01 bis 0,1 Sekunden und insbesondere bevorzugt 0,01 bis 0,08 Sekunden. Gegebenenfalls kann in dem erfindungsgemäßen Verfahren ein Sichter eingesetzt werden. Bevorzugt wird der Sichter nach Schritt iii) eingesetzt. Durch den Sichter wird Grobgut aus dem Rohgemisch abgetrennt. Das abgetrennte Grobgut wird zum Rohgemisch zurückgeführt. Grobgut im Rahmen der vorliegenden Erfindung sind Partikel mit Teilchengrößen größer 20 µm.

Das nach dem erfindungsgemäßen Verfahren erhältliche Aluminiumtrihydroxid weist eine hohe spezifische Oberfläche nach BET und damit eine exzellente Flammschutzwirkung in Kunststoffen auf. Dabei ist das erfindungsgemäß erhältliche Aluminiumtrihydroxid in Flüssigharze gut einarbeitbar und führt insbesondere nicht zu einem drastischen Viskositätsanstieg, wie er bei aus dem Stand der Technik bekannten Aluminiumtrihydroxiden mit hoher spezifischer Oberfläche nach BET beobachtet wird.

Das nach dem erfindungsgemäßen Verfahren erhältliche Aluminiumtrihydroxid weist im Allgemeinen eine mittlere Teilchengröße D₅₀ im Bereich von 3 bis 15 µm, bevorzugt 4 bis 12 µm, insbesondere bevorzugt im Bereich von 4 bis 6 µm auf. Das nach dem erfindungsgemäßen Verfahren erhältliche Aluminiumtrihydroxid hat eine enge Partikelgrößenverteilung. Die D₁₀-Werte liegen im Bereich von 1 bis 4 µm und bevorzugt im Bereich von 1 bis 1,5 µm.

Die D₉₀-Werte liegen im Bereich von 9 bis 20 µm und bevorzugt im Bereich von 9 bis 13 µm

Bevorzugt weist das nach dem erfindungsgemäßen Verfahren erhältliche Aluminiumtrihydroxid D₁₀-Werte im Bereich von 1 bis 1,5 µm, D₅₀-Werte im Bereich von 4 bis 6 µm und D₉₀-Werte im Bereich von 9 bis 13 µm auf.

Das nach dem erfindungsgemäßen Verfahren erhältliche Aluminiumtrihydroxid weist eine spezifische Oberfläche nach BET im Bereich von 2 bis 9 m²/g, bevorzugt im Bereich von 5 bis 9 m²/g auf. Das nach dem erfindungsgemäßen Verfahren erhältliche Aluminiumtrihydroxid enthält im Allgemeinen 0 bis 2 Gew.-%, bevorzugt im Bereich von 0 bis 1 Gew.-% und mehr bevorzugt 0,1 bis 0,5 Gew.-% Wasser bezogen auf Aluminiumtrihydroxid.

In einer besonderen Ausführungsform hat das nach dem erfindungsgemäßen Verfahren erhältliche Aluminiumtrihydroxid eine durchschnittliche Teilchengröße D₅₀ im Bereich von 3 bis 15 µm, eine spezifische Oberfläche nach BET im Bereich von 2 bis 9 m²/g und einen Wassergehalt im Bereich von 0 bis 2 Gew.-%, bezogen auf das Aluminiumtrihydroxid.

Das nach dem erfindungsgemäßen Verfahren erhältliche Aluminiumtrihydroxid ist in vernetzbare Flüssigharze einarbeitbar. Ein Verfahren zur Herstellung eines Duroplasten umfasst die Schritte
a) Einarbeiten eines nach dem erfindungsgemäßen Verfahren erhältlichen Aluminiumtrihydroxids in mindestens ein vernetzbares Flüssigharz zur Ausbildung einer aushärtbaren Mischung aus Aluminiumtrihydroxid und Flüssigharz, und
b) Vernetzen der nach a) erhaltenen Mischung Schritt b) erfolgt nach dem Fachmann bekannten Methoden beispielsweise mittels geeigneter Härtersysteme, gegebenenfalls unter Nutzung von Beschleunigern und weiteren Additiven.

Ein Verfahren zur Herstellung eines Duroplasten umfasst die Schritte
a) Einarbeiten eines nach dem erfindungsgemäßen Verfahren erhältlichen Aluminiumtrihydroxids in mindestens ein vernetzbares Flüssigharz aus der Gruppe bestehend aus ungesättigten Polyesterharzen und Epoxidharzen zur Ausbildung einer aushärtbaren Mischung aus Aluminiumtrihydroxid und Flüssigharz, und
b) Vernetzen der nach a) erhaltenen Mischung Vernetzbare Flüssigharze im Rahmen der vorliegenden Erfindung sind flüssige Polymerzusammensetzungen, die funktionelle Gruppen enthalten, die geeignet sind, miteinander zu reagieren und die Komponenten des vernetzbaren Flüssigharzes untereinander zu vernetzen. Geeignete Funktionalitäten sind Doppelbindungen, Epoxideinheiten und Kombinationen aus Isocyanat- und Alkoholeinheiten. Zur Herstellung eines Duroplasten kann ein (1) vernetzbares Flüssigharz oder eine Mischung aus zwei oder mehr vernetzbaren Flüssigharzen eingesetzt werden.

Das nach dem erfindungsgemäßen Verfahren erhältliche Aluminiumtrihydroxid wird als Flammschutzmittel verwendet, insbesondere als Flammschutzmittel für Duroplasten, die aus den vorstehend erwähnten vernetzbaren Flüssigharzen erhältlich sind.

Die vorliegende Erfindung wird durch die nachfolgenden Beispiele näher erläutert, ohne sie hierauf zu beschränken.

Die Erfindung wird durch die nachfolgenden Beispiele erläutert, ohne sie hierauf zu beschränken.

### Beispiele

Das nach dem erfindungsgemäßen Verfahren erhältliche Aluminiumtrihydroxid weist eine hohe spezifische Oberfläche nach BET und damit eine exzellente Flammschutzwirkung in Kunststoffen auf. Dabei ist das erfindungsgemäß erhältliche Aluminiumtrihydroxid in Flüssigharze gut einarbeitbar und führt insbesondere nicht zu einem drastischen Viskositätsanstieg, wie er bei aus dem Stand der Technik bekannten Aluminiumtrihydroxiden mit hoher spezifischer Oberfläche nach BET beobachtet wird.

### Vergleich der Kornverteilung und BET-Oberfläche

Tabelle 1 zeigt Aluminiumtrihydroxide, die nach Verfahren aus dem Stand der Technik hergestellt wurden (Vergleichsbeispiele 1 und 2) und ein Aluminiumhydroxid, das nach dem erfindungsgemäßen Verfahren hergestellt wurde (erfindungsgemäßes Beispiel)

**Tabelle 1**

| | D10 [µm] | D50 [µm] | D90 [µm] | D100 [µm] | BET [m²/g] |
|---|---|---|---|---|---|
| Vergleichsbeispiel 1 | 1,3 | 8 | 19 | - | 2,5 |
| Vergleichsbeispiel 2 | 1,3 | 7 | 17 | 25 | 3 |
| erfindungsgemäßes Beispiel 1 | 1,2 | 6 | 11 | 18 | 8 |

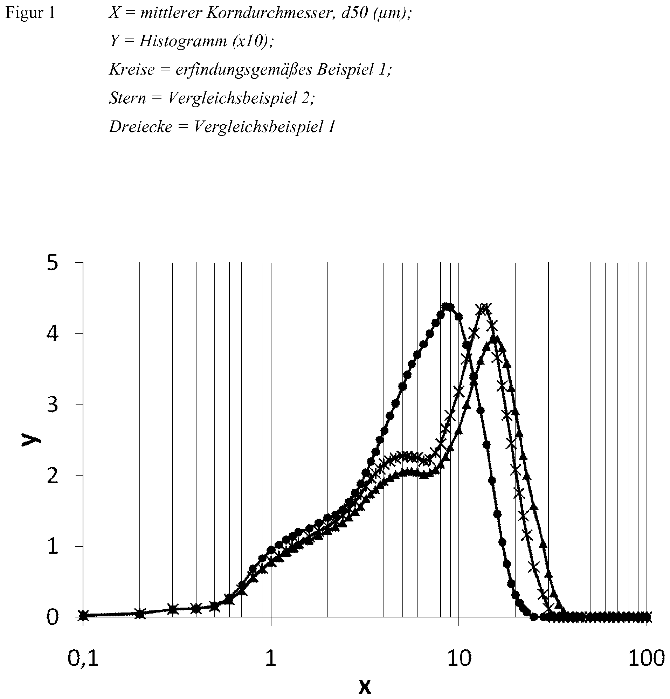

Das nach dem erfindungsgemäßen Verfahren hergestellte Aluminiumtrihydroxid ist deutlich feiner und zeigt eine schmalere Kornverteilung, wie durch Figur 1 verdeutlicht wird. Darüber hinaus zeigt das erfindungsgemäße Produkt eine deutlich höhere spezifische Oberfläche nach BET.

### Vergleich der relativen Viskositätseigenschaften:

Der Einfluss des Aluminiumtrihydroxid-Füllgrades an einem ungesättigten Polyesterharz (Palapreg P17-02 von DSM) wurde am erfindungsgemäßen Aluminiumtrihydroxid (erfindungsgemäßes Beispiel 1) im Vergleich zu Aluminiumtrihydroxid aus dem Stand der Technik (Vergleichsbeispiele 1 und 2) untersucht. Die mit steigenden Füllgraden dispergierten Mischungen wurden in einem Rheometer (MCR 301 der Fa. Anton Paar) bei 22 °C mit einem Platte/Platte Messkörper von 40 mm Durchmesser bei steigenden Drehzahlen vermessen. Bei einer Drehgeschwindigkeit von 0,25 min⁻¹ wurde ein Wert extrahiert und die so erhaltene Viskosität gegen den Füllgrad für jede Probe aufgetragen.

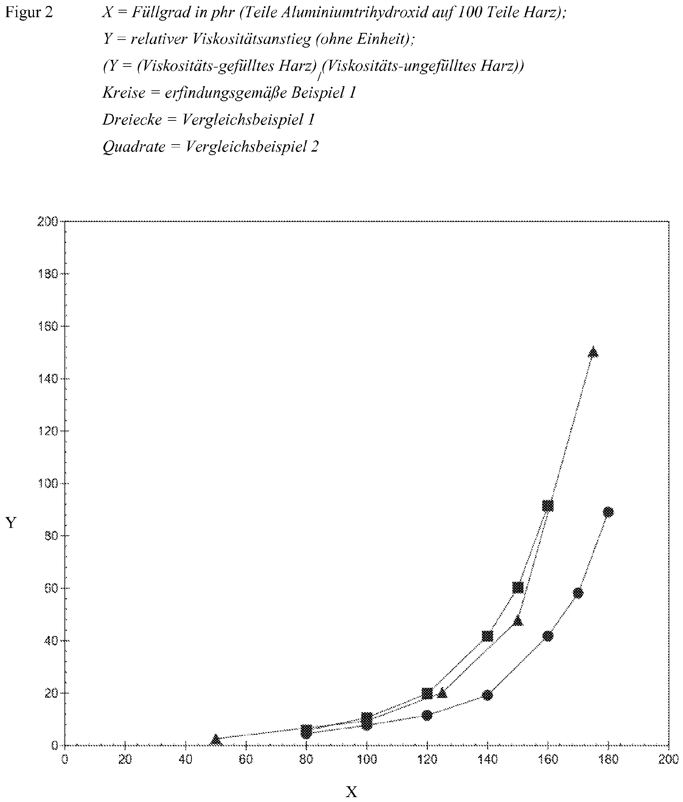

Figur 2 zeigt das Viskositätsverhalten des erfindungsgemäßen Aluminiumtrihydroxids (erfindungsgemäßes Beispiel 1) und der Vergleichsbeispiele 1 und 2.

Das erfindungsgemäße Beispiel 1 zeigt deutlich bessere Viskositätseigenschaften, d.h. es kommt mit diesem Aluminiumtrihydroxid zu einem deutlich niedrigerem Viskositätsanstieg wie bei vergleichbar feinem Aluminiumtrihydroxid (Vergleichsbeispiel 2) und sogar wie bei gröberem Aluminiumtrihydroxid (Vergleichsbeispiel 1) - und das gegen alle Erwartungen bei deutlich erhöhter BET-Oberfläche.

Die Ergebnisse werden in Figur 2 gezeigt.

### Vergleich der Flammschutzeigenschaften

Ein mit 150 Teilen Aluminiumtrihydroxid auf 100 Teile Harz (Palapreg P17-02) gefülltes Harz wurde ausgehärtet und anschließend der Sauerstoff-Anstieg-Index (LOI) an der gehärteten Probe gemessen. Bei Nutzung des Aluminiumtrihydroxids gemäß dem erfindungsgemäßen Beispiel 1 ist ein signifikanter Anstieg des Wertes von 34,4 auf 37,2 % O₂ im Vergleich zu Aluminiumtrihydroxid gemäß Vergleichsbeispiel 1 festzustellen. Dies zeigt eine deutlich verbesserte Flammschutzwirkung des erfindungsgemäßen Aluminiumtrihydroxids gegenüber Aluminiumtrihydroxid aus dem Stand der Technik (bei gleichzeitig verbesserter Verarbeitbarkeit).

Die Ergebnisse sind in Tabelle 2 gezeigt:

**Tabelle 2**

| | LOI [% O₂] | BET [m²/g] |
|---|---|---|
| Vergleichsbeispiel 1 | 34,4 | 2,5 |
| erfindungsgemäßes Beispiel 1 | 37,2 | 7,8 |
| Differenz | 2,8 | 5,3 |

### Vergleich der relativen Viskositätseigenschaften:

**Tabelle 3**

| | BET | d10 | d50 | d90 |
|---|---|---|---|---|
| Vergleichsbeispiel 3 | 2,0 | 2,5 | 11,0 | 19,9 |
| erfindungsgemäß Beispiel 2 | 2,6 | 2,0 | 10,0 | 18,7 |

Tabelle 3 zeigt die Kornverteilung eines bekannten Aluminiumtrihydroxids (Vergleichsbeispiel 3) und eines Aluminiumtrihydroxids, das nach dem erfindungsgemäßen Verfahren hergestellt wurde (erfindungsgemäßes Beispiel 2).

Auch hier zeigt sich ein positiver Viskositätseffekt trotz feinerer, schmalerer Kornverteilung und vergleichbarer BET-Oberfläche.

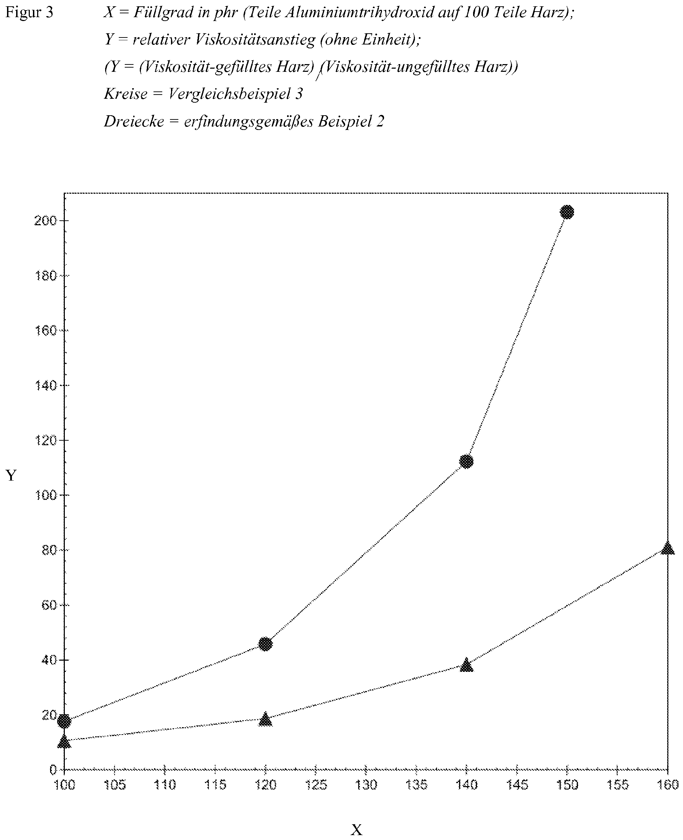

Die Ergebnisse der Viskositätsmessungen in Abhängigkeit vom Fällgrad sind in Figur 3 gezeigt.

## Patentansprüche

1. Verfahren zur Mahltrocknung eines Rohgemisches enthaltend Aluminiumtrihydroxid mit einer mittleren Teilchengröße D₅₀ im Bereich von 50 bis 130 µm und einer spezifischen Oberfläche nach BET im Bereich von 0,01 bis 0,5 m²/g und 0,1 bis 20 Gew.-% Wasser bezogen auf das Rohgemisch, enthaltend die Schritte
i) Zuführen des Rohgemisches in ein Mahltrocknungsaggregat,
ii) Zuführen eines Heißluftstroms mit einer Temperatur im Bereich von 20 bis 150 °C in das Mahltrocknungsaggregat der das Mahltrocknungsaggregat durchströmt, und
iii) Zerkleinern des im Rohgemisch enthaltenen Aluminiumtrihydroxid im Mahltrocknungsaggregat.

2. Verfahren gemäß Anspruch 1, wobei das Rohgemisch Aluminiumtrihydroxid und 3 bis 15 Gew.-% Wasser bezogen auf das Rohgemisch enthält.

3. Verfahren gemäß Anspruch 1 oder 2, wobei das Rohgemisch Aluminiumtrihydroxid mit einer mittleren Teilchengröße D₅₀ im Bereich von 90 bis 110 µm enthält.

4. Verfahren gemäß einem der Ansprüche 1 bis 3, wobei das Mahltrocknungsaggregat ein Rotor-Stator-System enthält und der Rotor eine Umfangsgeschwindigkeit im Bereich von 20 bis 200 m/s aufweist.

5. Verfahren gemäß einem der Ansprüche 1 bis 4, wobei das im Rohgemisch enthaltene Aluminiumtrihydroxid im Mahltrocknungsaggregat eine durchschnittliche Verweilzeit im Bereich von 0,01 bis 1 Sekunde hat.

6. Verfahren gemäß einem der Ansprüche 1 bis 5, wobei die Schritte i), ii) und iii) gleichzeitig ablaufen und das Verfahren kontinuierlich durchgeführt wird.

7. Verfahren gemäß einem der Ansprüche 1 bis 6, wobei der Heißluftstrom im Mahlaggregat eine turbulente Strömung mit einer Reynoldszahl größer 3000 ausbildet.

## Claims

1. Process for the milling-drying of a raw mixture containing aluminum trihydroxide having an average particle size D₅₀ in the range from 50 to 130 µm and a specific BET surface area in the range from 0.01 to 0.5 m²/g and containing from 0.1 to 20% by weight of water, based on the raw mixture, which comprises the steps
i) introduction of the raw mixture into a milling-drying apparatus,
ii) introduction of a hot air stream having a temperature in the range from 20 to 150°C into the milling-drying apparatus so as to flow through the milling-drying apparatus and
iii) comminution of the aluminum trihydroxide present in the raw mixture in the milling-drying apparatus.

2. Process according to Claim 1, wherein the raw mixture contains aluminum trihydroxide and from 3 to 15% by weight of water, based on the raw mixture.

3. Process according to Claim 1 or 2, wherein the raw mixture contains aluminum trihydroxide having an average particle size D₅₀ in the range from 90 to 110 µm.

4. Process according to any of Claims 1 to 3, wherein the milling-drying apparatus contains a rotor-stator system and the rotor has a circumferential velocity in the range from 20 to 200 m/s.

5. Process according to any of Claims 1 to 4, wherein the aluminum trihydroxide present in the raw mixture has an average residence time in the milling-drying apparatus in the range from 0.01 to 1 second.

6. Process according to any of Claims 1 to 5, wherein steps i), ii) and iii) proceed simultaneously and the process is carried out continuously.

7. Process according to any of Claims 1 to 6, wherein the hot air stream forms a turbulent flow having a Reynolds number of greater than 3000 in the milling apparatus.

## Revendications

1. Procédé de broyage - séchage d'un mélange brut contenant du trihydroxyde d'aluminium ayant une taille moyenne de particules D₅₀ comprise dans la plage de 50 à 130 µm et une surface spécifique selon BET dans la plage de 0,01 à 0,5 m²/g et 0,1 à 20 % en poids d'eau, par rapport au mélange brut, comprenant les étapes consistant à :
i) amener le mélange brut dans un groupe de broyage - séchage,
ii) amener un flux d'air chaud ayant une température située dans la plage de 20 à 150 °C dans le groupe de broyage - séchage, qui traverse le groupe de broyage - séchage, et
iii) réduire en petits morceaux le trihydroxyde d'aluminium contenu dans le mélange brut dans le groupe de broyage - séchage.

2. Procédé selon la revendication 1, dans lequel le mélange brut contient du trihydroxyde d'aluminium et 3 à 15 % en poids d'eau par rapport au mélange brut.

3. Procédé selon la revendication 1 ou 2, dans lequel le mélange brut contient du trihydroxyde d'aluminium ayant une taille moyenne de particules D₅₀ comprise dans la plage de 90 à 110 µm.

4. Procédé selon l'une des revendications 1 à 3, dans lequel le groupe de broyage - séchage contient un système de rotor - stator et le rotor présente une vitesse en périphérie dans la plage de 20 à 200 m/s.

5. Procédé selon l'une des revendications 1 à 4, dans lequel le trihydroxyde d'aluminium contenu dans le mélange brut a un temps de résidence moyen dans le groupe de broyage - séchage dans la plage de 0,01 à 1 seconde.

6. Procédé selon l'une des revendications 1 à 5, dans lequel les étapes i), ii) et iii) se déroulent simultanément et le procédé est réalisé en continu.

7. Procédé selon l'une des revendications 1 à 6, dans lequel le flux d'air chaud forme un écoulement turbulent ayant un nombre de Reynolds supérieur à 3000 dans le groupe de broyage.
